(19) Europäisches Patentamt
European Patent Office
Office européen des brevets

(11) **EP 3 242 381 A1**

(12) **EUROPÄISCHE PATENTANMELDUNG**

(43) Veröffentlichungstag:
**08.11.2017  Patentblatt 2017/45**

(51) Int Cl.:
*H02K 23/04* *(2006.01)*      *H02K 23/60* *(2006.01)*
*H02K 53/00* *(2006.01)*

(21) Anmeldenummer: **16001022.9**

(22) Anmeldetag: **04.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Preglau, Otto**
**9062 Moosburg (AT)**

(72) Erfinder: **Preglau, Otto**
**9062 Moosburg (AT)**

(54) **GENERATOR**

(57)    Beim neuartigen Generator besteht der Stator 8 aus im Kreis angeordneten und ortsfesten Hufeisenelektromagneten, wobei die beiden Schenkel der Hufeisenmagneten 12 zwei verschieden große kreisende Magnetringe: N und S bilden und so die Feldlinien im Magnetfeld parallel zueinander verlaufen.

Als Modifikation können aber auch einzelne Stabelektromagneten 8 und 9 die beiden erforderlichen ortsfesten Magnetringe bilden, wobei die Stabelektromagneten 8 und 9 N und S, ineinander verschoben, drehfest montiert sind und die Feldlinien des Magnetfeldes dadurch anders verlaufen aber optimal vom Anker 12 geschnitten werden.

Dabei sind eine vorbestimmte Anzahl von translatorisch ($\varphi = 0$), im Kreis geführte und zwischen den ortsfesten Magnetringen 8 und 9 eine Drehung zeigen und somit die Feldlinien der Magnetringe schneiden und pulsierenden Strom liefe.rn, der gleichgerichtet einen Gleichstrom erreicht., nämlich die Anker (12).

Dass dem neuartigen Generator praktisch 100% der berechneten Elektroenergiemenge nutzbar zur Verfügung steht, ist aber ein Irrtum, da bei der Gewinnung von elektrischen Strom ca. 30% infolge von Wärmeabstrahlung und ca. 5% infolge Reibung verloren geht, ist dadurch der "output" an elektrischen Strom höchstens 65%. Abschließend soll noch angemerkt werden, dass Polwender (18) für eine Glättung des Gleichstroms sorgen.

FiG. 2

## Beschreibung

Ziel der Erfindung ist es bessere Wirkungsgrade bei der Umwandlung von mechanischer Arbeit in elektrische Energie zu erreichen.

Wechselstrom-Generatoren, die nach dem dynamoelektrischen Prinzip arbeiten sind allgemein bekannte Aggregate, die die Kraft und Bewegung, also die mechanische Energie in elektrische Energie umwandeln.

Wenn ein Leiter nämlich magnetische Feldlinien schneidet, so wird in ihm Spannung induziert.

Bei der Wechselstrommaschine liegt der Rotor, eine Spule mit Eisenkern (Anker, bzw. Induktor) zwischen den ungleichnamigen Polen eines kräftigen Elektromagneten.

Dreht man die Spule mit dem Weicheisenkern um ihre waagrechte Achse im Mggnetfeld, so zeigt der Spannungsmesser eine Spannung wechselnder Richtung an, also Wechselspannung.

Von den mitrotierenden Schleifringen wird die induzierte Spannung durch zwei feststehende Kohlebürsten abgenommen, wobei durch einen Kommutator die Spannung für den äußeren Kreis gleichgerichtet werden kann.

Da sich bei den Innenpolmaschinen das Magnetfeld dauernd ändert und die Spulen ruhen, braucht man die Spannung nicht mehr durch Schleifringe abzunehmen, was in den großen Elektrizitätswerken von Vorteil ist.

Nach diesem Prinzip arbeitet auch die Fahrradlichtmaschine. Bei Ihr rotiert ein vierpoliger Magnet zwischen den am Gehäuse befestigten Induktionsspulen.

Sobald nun vom Generator elektrischer Strom abgeleitet wird treten am Antriebsrad Kräfte auf, die der Drehrichtung des Antriebsrades entgegenwirken und somit überwunden werden müssen, was Ursache des schlechten Wirkungsgrades bei Generatoren allgemein ist.

Dem gegenüber und nach dem Oberbegriff des Patentanspruchs trägt der drehende Teil des neuartigen Generators, wie bei den Magnetkupplungen, entweder verschoben oder symetrisch angeordnet, die beiden Magnetringe drehbar gelagert. wie sie in Fig. 1 und Fig. 2, sowie in Fig. 3 und in Fig.4 dargestellt sind.

Ein Gleicgstrommotor gibt nicht nur ein Drehmoment ab, wenn man ihn an Spannung legt, sondern erzeugt umgekehrt auch eine Spannung, wenn man den Anker von außenher antreibt.

Der Motor wirkt dann als Sparmungserzeuger (Generator oder Dynamo).

Bei der Bewegung eines Leiters senkrecht zu einem Magnetfeld wird an dessen Enden eine Spannung eingeleitet.

Das heißt, daß ein unten ausführlich beschriebenes Getriebe vorbestimmt jeweils zum gleichen Zeitpunkt ein Nordpol des inneren Rotorringes und ein Südpol des äußeren Rotorringes über einen der Statoren hinwegstreichen, wodurch es zu einer Drehung des Magnetfeldes und zum Schneiden der Leiter der Induktionsspulen an den Statoren durch die Feldlinien kommt und zur Erzeugung kräftiger Induktionsströme ohne besondere Arbeitsleistung.

Wie oben angedeutet entstehen die Induktionsströme durch Einwirkung der Rotormagneten auf die Spulendrahtwicklung, daher wird ihre Stärke mit der des Magneten wachsen.

Dabei sind induzierte elektrische Ströme um so kräftiger, je rascher die Bewegungen von Magnet oder Leiter sind.

Die Leistung kann natürlich auch in diesem Fall durch mehrpolige Maschinen gesteigert werden.

Bei der Gegenbewegung der elektromagnetischen Rotoren zu den Statoren ändert sich das Magnetfeld zwischen den Elektromagneten der Rotoren ständig in Stärke und Richtung und ein angeschlossenes Instrument zeigt an, daß in den Spulen dabei vier gegeneinander verschobene Wechselspannungen von gleicher Frequenz und Amplitude induziert werden.

Bei einer kreisförmigen Spulenachse und dicht nebeneinander liegenden Wicklungsanfang und -ende spricht man von Ringspulen.

Im Inneren des Spulenkörpers wird beim Stromdurchgang durch den Leiter ein Magnetfeld erzeugt, das um so homogener ist, je größer die Spulenlänge gegenüber dem inneren Spulenradius ist.

Das ist nicht verwunderlich, da die Statoren unter dem Einfluß entgegengesetzter Magnetpole stehen. Wie stark diese auf die Windungen wirken, ist entscheidend für die Stärke (Spannung) der induzierten Ströme.

Darum fließt der Strom da am stärksten, wo die Pole am nächsten sind. Er wird um so schwächer, je weiter die einzelne Drahtwindung (Spule) von dem nächsten Pol entfernt ist. In der Mitte zwischen beiden Polen wird überhaupt kein Strom erzeugt.

Da alle Windungen (Spulen) nur Stücke eines Drahtes sind, fließen die Einzelströme aus den Statoren in je zwei Kupferdrähten insgesamt als Drehstrom zum Verbraucher oder zum Gleichrichter, von wo der Gleichstrom den Elektromagneten zugeführt wird.

Hat man den Elektromagneten beim Herstellen magnetisiert, so bleiben in ihm Elementarmagnete ausgerichtet.

Ihr schwaches Feld erzeugt im Dipol bei Rotation einen schwachen Strom, der das Magnetfeld und damit den Induktionsstrom verstärkt, bis die volle Spannung erreicht ist, dann erst schließt der Magnetschalter die Verbraucher an.

Eine mögliche Ausführungsform der vorrichtungstechnischen Erfindung eines neuen Generators soll nachstehend anhand der beigefügten Zeichnungen nun erläutert werden.

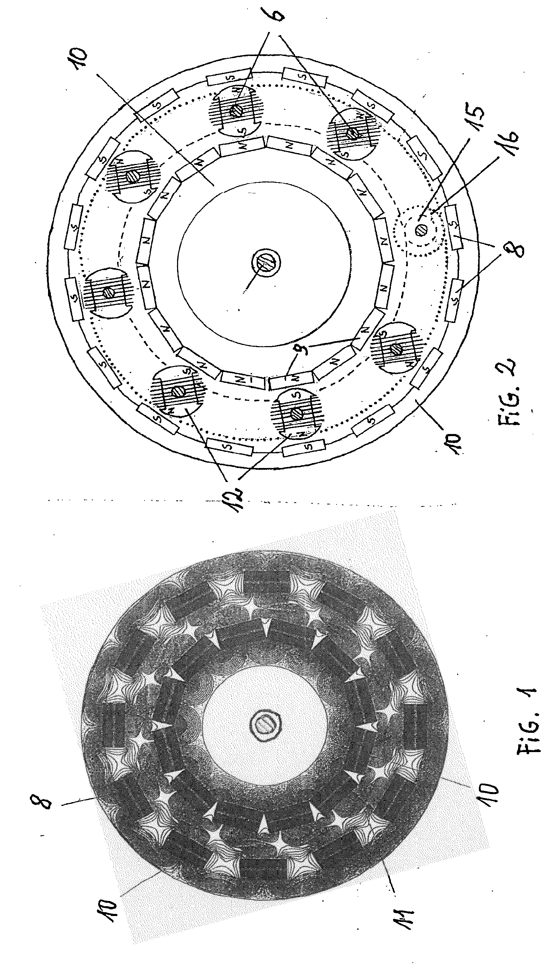

Fig. 1 soll vorallem den Verlauf der Feldlinien im Luftspalt zwischen den beiden Magnetringen, in dem auch ein Anker schematisch eingezeichnet ist, und auch anschaulich den Flußverlauf in den Weicheisenringen darstellen.

Fig. 2 demonstriert in einem Schnittbild den neuen Generator von vorne, mit abgehobener Antriebseinheit und wie die acht translatorisch geführten Anker, die Statoren, mit dem Magnetfeld der Rotoren an den beiden Elektromagneten in Wirkkontakt treten.

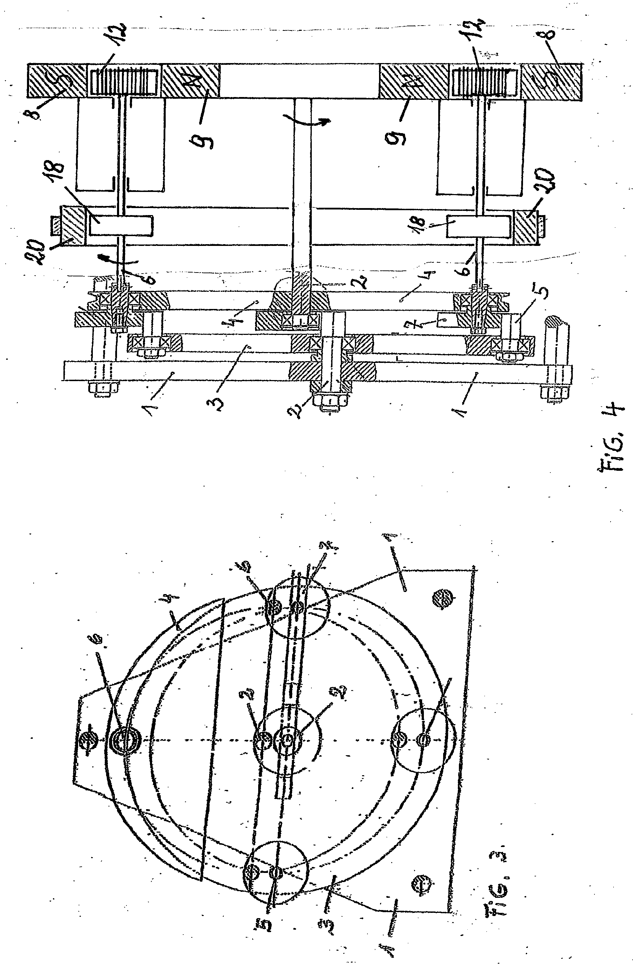

Fig. 3 zeigt in einem Schnittbild von vorne die Antriebseinheit des neuen Generators, nämlich einen Paralleltrieb zweier exzentrisch gelagerter Scheiben, bei dem die Baugruppe Welle - Hebel - Welle eine Translationsbewegung (Drehwinkel $\varphi_{absolut}$ = 0) auf einer Kreisbahn erreicht und die translatorisch geführten Wellen mit Spulen und Eisenkern gefüllt, als Anker bestückt sind.

Fig. 4 schließlich zeigt den Generator von der Seite mit der Antriebseinheit und dem erforderlichen Getriebe, sowie die kreisenden Magnetringe, wobei sowohl der äußere als auch der innere Magnetring aus Hufeisenelektromagneten besteht.

Der Kommutator (Polwender) ist ein mechanischer Schalter zur Umkehrung der Stromrichtung in Stromkreisen und hierbei aus voneinander isolierten und mit der Ankerwicklung verbundenen Kupferlamellen zusammengesetzt ist, und bewirkt mit den auf seiner Oberfläche schleifenden Bürsten eine periodische Umschaltung und Frequenzwandlung des zu- oder abführenden elektrischen Stroms, aber eine Glättung desselben.

Die Zelchnungen zeigen in anschaulicher Weise einen möglichen Aufbau eines Generators bei dem die abgewinkelte in der Halterung (1) ortsfest montierte Achse (2) einmal eine drehbar und exzentrisch gelagerte Scheibe (3) und zum anderen die drehbar gelagerte Scheibe, als Antriebsrad (4) ausgebildet, trägt. Die an der Peripherie der exzentrisch gelagerten Scheibe (3) vorbestimmte Anzahl gelagerter Wellen (3) müssen gleich weit vom Drehpunkt entfernt sein wie die drehbar gelagerten Wellen (6) vom Drehpunkt des Antriebsrades (4) damit alle Wellen (5 und 6) bei Drehung des Systems gleich große Kreisbahnen beschreiben, wobei die Wellen (5 und 6) mittels Hebel (7) drehfest wirkverbunden sind.

Die Baugruppe Welle (5) - Hebel (7) - Welle (6) eines solchen Parallelttriebs führt eine Translationsbewegung auf einer Kreisbahn aus.

Wie in Fig. 1 und in Fig. 2 dargestellt ist sind außerhalb des Außenmagnetringes (8) und innerhalb des Innenmagnetringes (9) weicheisenringe (10) angebracht um den Magnetfluß nach außen und nach innen abzuschirmen.

Die translatorisch geführten Wellen (6) tragen im Luftspalt (11) zwischen den Magnetringen (8 und 9) die acht Anker (12) mit den Induktionsspulen (13), wobei die genannten Wellen (6) in einer Scheibe (4) drehbar lagern.

An mindestens einer zusätzlichen translatorisch geführten Welle (6) sitzen, wie in Fig. 2 und in Fig. 4 dargestellt, zwei ungleich große Isolierscheiben (15 und 16).

Fig. 4 schließlich soll den möglichen Aufbau des neuartigen Generators bildlich darstellen, wobei in dieser Zeichnung nur zwei von mindestens acht oder mehrere Anker (12) eingezeichnet sind.

Dabei zeigen im Betrieb durch den dargesfellten Getriebeaufbau, dass alle Anker (12) zwischen den Schenkeln der kreisenden Hufeisenmagneten (8, 9) im Uhrzeigersinn geführt werden und bei jeder Umkreisung der Zentralachse (2), eine Drehung von 360° gegen den Uhrzeigersinn erreichen, und zwar infolge ihrer translatorischen Führung. ($\varphi$ = 0)

Wird der Leiter in den Magneten hinein oder aus ihm heraus, das heißt senkrecht zu den Feldlinien bewegt, so schlägt das Galvanometer nach der einen oder anderen Seite aus.

Wenn ein Leiter magnetische Feldlinien schneidet, so wird in ihm Spannung induziert, in Form einer halben Sinuskurve, wodurch dieser Gleichstrom nicht konstant ist, er pulsiert zwischen Null und einem Höchstwert.

Sind acht Anker (12) gegeneinander phasenversetzt, so geben sie ihre Spannung unterteilt mit acht Spannungsmaxima ab und liefern somit insgesamt einen minimal schwankenden Gleichstrom ab, der mittels Kabel, (17) an den Verbraucher weiter geleitet wird.

Abschließend muß nach angemerkt werden, daß bei Hufeisenmagneten die Feldlinien im Magnetfeld wohl parallel zueinander verlaufen, wie in Fig. 2 dargestellt, wobei der Anker (12) translatorisch, also ohne Drehwinkel $\varphi$ = 0 die Feldlinien schneidet.

Infolge des Wirkkontakts der translatorisch geführten Anker (12) ($\varphi$ = 0) wird bei der Drehung der beiden Magnetringe (8 und 9) wohl jeweils eine gleich große Kraft ($F_8$ und $F_9$) aufgebracht, nicht aber das gleich große Drehmoment M.

Ein Drehmoment M besteht nämlich sowohl aus der beaufschlagten Umfangskraft F, als auch von der Größe des Radius r (M = F x r), wobei bei der Erfindung die beiden Magnetringe (8 und 9) verschieden große Radien zeigen ($r_8$, $r_9$), was ein Ungleichgewicht im System schaft.

Will man ein Drehmomentengleichgewicht im System erreichen, so muß bei dem Magnetring (9), also mit kleinem Radius die Kraft F vergrößert werden.

$$(M = 2F \; x \; r/2 = F \; x \; r)$$

Um dieser Forderung gerecht zu werden, ist es erforderlich die beiden Magnetringe (8 und 9) mit Stabelektromagneten auszugestalten, wobei die inneren Stabmagneten (9) mit einer größeren Magnetkraft $F_M$ auszustatten ist und die Feldlinien im Magnetfeld auch parallel zueinander verlaufen.

Zusammengefaßt heißt das, dass bei einer starken Magnetkraft $F_M$ am inneren Ring (9) der Magnetringe der neuartige Generator trotz Erzeugung von elektrischem Gleichstrom, der nur im geringstem Maße schwankt, abgenommen werden kann, wobei das System absolut im Leerlauf rotiert.

Dabei ist es möglich mittels Bürsten (18) an der Innenseite eines bzw. zweier ortsfester Ringe (19) und (20) Gleichstrom bzw. Wechselstrom abzunehmen und diesen an den Verbraucher weiterzuleiten.

Bei der ausführlichen Beschreibeung wurde nur der Aufbau eines Gleichstromgeneratours und eines Wechselstromgenerators ausführlich beschrieben, wobei aber auch anders aufgebaute Generatoren mit einem rotierenden Stator und relativ zu diesem die "drehenden" Rotoren mit dem Drehwinkel $\varphi = 0$ im Kreis fahren und so elektrischen Strom liefern.

Beim Gleichstromgenerator wird im Magnetfeld zwischen Nord- und Südpol beim drehen der Leiterschleife in dieser eine sinusförmigen Spannung induziert, die mit Hilfe der Stromwender, die nach jeder Halbdrehung eine Änderung der Stromrichtung bewirken und an der Innenseite eines ortsfesten Ringes als pulsierende Gleichspannung abgegriffen werden kann.

Beim Wechselstromgenerator wird im Magnetfeld zwischen Nord- und Südpol beim Drehen der Leiterschleife in dieser eine sinusförmige Wechselspännung induziert, die mit Hilfe von ortsfesten Schleifringen abgegriffen werden kann.

Beim Wechselstromgenerator wird im Magnetfeld, zwischen Nord- und Südpol, beim Drehen der Leiterschleifen (21) eine sinusförmige Wechselspannung, die mit Hilfe von ortsfesten Schleifringen (19) (Bürsten), in mehreren Etagen angeordnet sind und abwechselnd phasenverschoben, jeweils am Innenrand der ortsfesten Ringe (19) mittels Bürsten abgegeben und weitergeleitet durch Kabel (17), dem Verbraucher zugeführt wird.

Meine Defination der Bewegung eines translatorisch geführten Körpers $\varphi$ 0 (nicht eines Massenpunktes) lautet:

Wenn ein translatorisch geführter Körper $\varphi = 0$ (eine Scheibe (12 und 18)) mit einem vorbestimmten Radius r im Kreis mit ebenfalls einem vorbestimmten großen Radius R , beispielsweise im Uhrzeigersinn geführt wird, so zeigt dieser oben genannte Körper $\varphi = 0$, eine Scheibe 12 und 18 objektiv eine Gegendrehung, also gegen den Uhrzeigersinn aus.

**Patentansprüche**

1. Generator zur Umwandlung von minimaler mechanischer Leistung in elektrischen Strom ist **dadurch gekennzeichnet, dass**
   eine abgewinkelte, in der Halterung (1) festmontierte Achse (2), eine drehbare und exzentrisch gelagerte Scheibe (3) und die zweite drehbar gelagerte Scheibe (4) als Antriebsrad (4) ausgebildet, trägt, wobei die Anzähl der gelagerten Wellen (5) gleich weit vom Drehpunkt entfernt sind, wie die drehbar gelagerten Wellen (6) vom Drehpunkt des Antriebsrades (4) und damit die Welle (5) und (6) bei Drehung des Systems, beziehungsweise des Antriebsrades (4) gleich große Kreisbahnen beschreiben, wobei alle genannten Wellen (6) an ihren Enden die Anker (12) drehfest tragen und die dadurch eine Translation ( $\varphi = 0$) erreichen.

2. Generator nach Anspruch 1, **dadurch gekennzeichnet, dass**
   der neuartige Generator trotz Ableitung von elektrischem Strom an die Verbrausher, kontinuierlich im Leerlauf rotiert, das heißt, dass keine Kräfte oder Momente, außer der anfallenden Reibung von ca. 5% der Drehrichtung des Antriebsrades (4) entgegen wirkt

3. Generator nach einem der Ansprüche 1 und 2 **dadurch gekennzeichnet, dass**
   die kreisendern Hufeisenelektromagneten einen äußeren und einen inneren Ring bilden, wobei translatorisch geführte ($\varphi = 0$) Anker (12) zwischen den beiden kreisenden Magnetringen N und S im Kreis fahren und somit bei einer Umkreisung jeder Anker (12) sich mit seiner Achse (6) um 360° dreht und somit die bestehenden Feldlinien im elektrischen Feld schneidet und somit elektrischen Strom liefert.

4. Generator nach einem der Ansprüche 1 bis 3 **dadurch gekennzeichnet dass**
   die Anker (12) auf Scheiben 15 und 16 sitzen und mit den translatorisch geführten Wellen (6) antriebsverbunden sind, wodurch infolge der Wirkverbindung mittels der translatorisch geführten Wellen (6) ( $\varphi = 0$) eine relative Drehung gegenüber der beiden kreisenden Magnetringe (8 und 9) zustande kommt und somit ein Energiefluß infolge des "Schneidens" der Feldlinien im Magnetfeld erfolgt.

5. Generator nach einem der Ansprüche 1 bs 4 **dadurch gekennzeichnet, dass**
   beim beschriebenem Getriebe zur Energiegewinnung, ein Kommutator (18) erforderlich ist, zumal mindestens sechs bis acht Anker (12) phasenverschoben Arbeit leisten, wodurch eine Glättung des Gleichstroms erreicht wird, und
   ein Gleichstrom abgenommen werden kann, der nur noch im geringen Maße schwankt.

FiG. 1

FiG. 2

EP 3 242 381 A1

FIG. 4

FIG. 3

Europäisches Patentamt

European Patent Office

Office européen des brevets

**ERKLÄRUNG**

die nach Regel 63 des Europäischen Patent-übereinkommens für das weitere Verfahren als europäischer Recherchenbericht gilt

Nummer der Anmeldung

EP 16 00 1022

| | KLASSIFIKATION DER ANMELDUNG (IPC) |
|---|---|
| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind.<br><br>Grund:<br><br>1.<br>Die Erfindung ist für den Fachmann nicht ausführbar (Artikel 83 EPÜ).<br>Die Erfindung betrifft letztlich ein vermeintliches perpetuum mobile, also ein Gerät, welches vermeintlich mehr Gesamtenergie erzeugt als es benötigt. Dies verstößt gegen das fundamentale physikalische Gesetz der Energieerhaltung. Auf Seite 1, Zeilen 22-25 der Beschreibung erläutert der Anmelder, dass bei einem herkömmlichen Generator, bei dem "elektrischer Strom abgeleitet wird, [...] am Antriebsrad Kräfte auf[treten], die der Drehrichtung des Antriebsrades entgegenwirken und somit überwunden werden müssen, was Ursache des schlechten Wirkungsgrades bei Generatoren allgemein ist."<br>Im Folgenden und auf Seite 2, Zeilen 8-11 kommt es "dem gegenüber [... beim] neuartigen Generator [...] zur Erzeugung kräftiger Induktionsströme ohne besondere Arbeitsleistung ."<br>Seite 5, Zeilen 19-26 der Beschreibung sind zwar grammatikalisch fehlerhaft, dennoch ist dieser Passage eindeutig zu entnehmen, dass " [das] zusammengefasst heißt, dass [...] [dem] neuartige[n] Generator [...] elektrische[r] Gleichstrom [...] abgenommen werden kann, wobei das System absolut im Leerlauf rotiert. Dabei ist es möglich, [...] Gleichstrom bzw. Wechselstrom abzunehmen und diesen an den Verbraucher weiterzuleiten."<br>In der Zusammenfassung, Zeilen 14-17 steht schließlich, "dass dem neuartigen Generator praktisch 100% der berechneten Elektroenergiemenge nutzbar zur Verfügung<br>-/-- | INV.<br>H02K23/04<br>H02K23/60<br>H02K53/00 |
| Recherchenort<br>München | Abschlußdatum<br>18. November 2016 | Prüfer<br>Strasser, Thorsten |

EPO FORM 1504 (P04F39)

**Europäisches Patentamt**
**European Patent Office**
**Office européen des brevets**

## ERKLÄRUNG

die nach Regel 63 des Europäischen Patentübereinkommens für das weitere Verfahren als europäischer Recherchenbericht gilt

**Nummer der Anmeldung**

EP 16 00 1022

| | KLASSIFIKATION DER ANMELDUNG (IPC) |
|---|---|
| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind.<br><br>Grund:<br><br>steht, ist aber ein Irrtum, da bei der Gewinnung von elektrischen Strom ca. 30% infolge von Wärmeabstrahlung und ca. 5% infolge Reibung verloren geht [. Dadurch] ist [...] der "output" an elektrischen Strom höchstens 65%."<br>Daraus folgt, dass gemäß der vorliegenden Anmeldung der Generator neben Reibungswärme und ohmscher Wärme elektrische Energie erzeugt, ohne dass von außen mehr Energie in den Generator hineingesteckt werden muss, als für die Überwindung der Reibung und der ohmschen Verluste benötigt wird. Dies verstößt gegen das fundamentale physikalische Gesetz der Energieerhaltung.<br>Die Erfindung ist daher für den Fachmann nicht ausführbar (Artikel 83 EPÜ).<br><br>2.<br>Jede Änderung der Anmeldung, die von einem vermeintlichen perpetuum mobile wegführte, würde über den Inhalt der ursprünglich eingereichten Anmeldung hinausgehen und damit gegen Artikel 123(2) EPÜ verstoßen.<br><br>3.<br>Die Einwände sind so schwerwiegend, dass sie nicht überwunden werden können.<br><br>Der Anmelder wird darauf hingewiesen, dass im Zuge der Prüfung eine Recherche durchgeführt werden kann, sollten die einer Erklärung gemäss Regel 63 EPÜ zugrundeliegenden Mängel behoben worden sein (Vgl. EPA-Richtlinien C-IV, 7.2). | |

| Recherchenort | Abschlußdatum | Prüfer |
|---|---|---|
| München | 18. November 2016 | Strasser, Thorsten |

EPO FORM 1504 (P04F39)

Seite 2 von 2